# EUROPEAN PATENT APPLICATION

(11) **EP 2 393 039 A1**
(43) Date of publication of application: **07.12.2011**
(21) Application number: 10164867.3
(22) Date of filing: 03.06.2010
(51) Int. Cl.: G06K 9/00, G06T 7/00

(54) **Method for accurate detection of image content**

(71) Applicant: Mitsubishi Electric R&D Centre Europe B.V., Guildford Surrey GU2 7YD (GB); Mitsubishi Electric Corporation, Tokyo 100-8310 (JP)
(72) Inventor: Paschalakis, Stavros, Guildford, Surrey GU1 2LT (GB); Giani, Alfredo, London N1 8DN (GB); Hernandez-Marin, Sergio, Guildford GU1 3JU (GB)
(74) Representative: Whitlock, Holly Elizabeth Ann

(57) **Abstract**

A method of detecting content in an image using a probability map comprises values reflecting a probability that pixels of an image are of said content, by processing signals corresponding to the probability map, the method comprising performing a first processing step to values in the probability map arranged in a first 1-dimensional arrangement, and performing a second processing step to values arranged in a second 1-dimensional arrangement, to produce a modified probability map.

## Description

The invention relates to the accurate detection of regions which satisfy certain criteria in images, for example, having a certain attribute, such as a specific colour or texture, or being within a specified range for a certain attribute, or being of a certain content-type, typically characterised by predetermined values or ranges for certain attributes, that are measurable characteristics or features in images. More specifically, in the main embodiment, the invention relates to the accurate detection of skin regions in images.

Skin detection is a method commonly used in various image and video processing application areas, such as image categorisation, e.g. detection of pornographic images, face detection and tracking and, more recently, for region-specific TV image enhancement.

Probably the most commonly used source of information for skin detection is colour. One such colour-based approach for skin detection is described in Jones, M.J., Rehg, J.M., "Statistical Color Models with Application to Skin Detection", In Proceedings of IEEE International Conference on Computer Vision and Pattern Recognition CVPR'99, pp. 274-280, June 1999. There, a statistical skin colour model is used in conjunction with a statistical non-skin colour model, both models defined in the same colour space, for accurate skin detection. A more sophisticated approach is presented in patent US 7,444,022 "METHOD AND APPARATUS FOR SEPARATING CONTENT TYPES IN IMAGES". Briefly, in US 7,444,022, skin pixels are initially identified based on a broad first colour-based pixel detection method, and any false detections are subsequently separated based on a more specialised second colour-based pixel separation method. The end result is a high-accuracy skin probability map, where actual skin pixels have high values and non-skin pixels have low or zero values.

The problem with colour-based methods is that the colour of skin is not typical only of skin. Non-skin regions will sometimes have colours which are typical of skin and, consequently, high values in the probability map. Furthermore, effects such as shadows or highlights will still result in some actual skin pixels having an atypical colour for skin and, consequently, low values or zero values in the probability map. These problems typically result in false detections and false rejections, respectively, during any subsequent thresholding of the probability map in order to decide whether each pixel represents skin or not.

This problem is typically addressed by considering the 2D neighbourhood around each pixel in the probability map and/or the original image, in order to reach a more confident decision about each pixel based on the pixels around it. For example, in Fleck, M., Forsyth, D., Bregler, C., "Finding naked people", In Proceedings of European Conference on Computer Vision ECCV'96, vol. 2, pp. 593-602, 1996, colour-based skin detection is used in conjunction with a texture-based filter, on the basis that skin is relatively uniform. There, texture strength is defined as the difference between an original intensity image and its filtered version using a multi-ring median filter approximation. A problem with that method is that the results will depend on whether the local neighbourhoods in which texture strengths are calculated are appropriate for a given skin region size and image resolution. Furthermore, the computation and processing of the texture image can be expensive for larger neighbourhoods. In Zafarifar, B., Martiniere, A., de With, H.N., "Improved Skin Segmentation for TV Image Enhancement, Using Color and Texture Features", In Proceedings of International Conference on Consumer Electronics ICCE 2010, pp. 373-374, 2010, a colour-based skin detector is coupled with a local 2D texture measure to detect skin areas. With this method, the local 2D texture is calculated for a minimal, in terms of size, neighbourhood comprising 4 pixels (above, below, left and right of the pixel of interest), so the image itself has to be scaled and processed at multiple scales. A problem with this approach is that, in order to work reliably at all image resolutions and skin region sizes, a large number of scales will have to be processed according to this very localised texture filter, which results in an increased computational complexity and memory costs. Furthermore, the choice of scaling method is also important, since it will affect the responses produced by the colour and texture filters, but there is no universal method that will produce optimum results for both small and large skin regions in the original image.

To address such problems associated with local neighbourhood-based processing, more complex approaches based on full-image 2D region analysis also exist. In EP 0 836 326 A2 "SKIN AREA DETECTION FOR VIDEO IMAGE SYSTEMS" skin tone detection is coupled with a shape detector in order to detect skin areas in videos. With that method, a shape locator initially identifies the edges of all objects in a video frame to determine whether such edges approximate the outline of a predetermined shape that is likely to contain a skin area. Once objects likely to contain skin areas are located, the tone detector examines the pixels of each located object to determine if such pixels have signal energies that are characteristic of skin areas. Then, the colour parameters of those areas having energy characteristic of skin are sampled in order to determine a skin colour range, and this range is then compared with all the tones in the image, in order to identify other skin areas in the image. A problem with this, and other similar approaches, is the computational complexity they entail compared to low-level local neighbourhood approaches.

In view of the prior art and its limitations, there is provided a new method and apparatus for detecting content, for example, skin, in images which performs morphological processing at a very low computational cost, by performing region analysis in a first 1D direction followed by small neighbourhood processing in another 1D direction. The new method has a very low computational complexity and memory requirements, and is applicable to both high and low resolution images, and large and small regions, without changes to its operating parameters and without the need for processing an image at multiple resolutions.

Aspects of the invention are set out in the accompanying claims.

An aspect of the invention provides a method of detecting content in an image using a probability map comprising values reflecting a probability that pixels of an image are of said content, by processing signals corresponding to the image or probability map, the method comprising performing a first processing step to values in the probability map arranged in a first predetermined 1-dimensional arrangement to modify the probability map.

Detecting content means identifying pixels satisfying predetermined criteria in images, for example, having a certain attribute, such as a specific colour or texture, or being within a specified range for a certain attribute, or representing certain content or content-type, typically characterised by predetermined values or ranges for certain attributes, that are measurable characteristics or features in images, and including having an appropriate probability value.

The probability map is modified to refine or improve, in other words, to produce probability values which more accurately reflect whether or not each pixel is of the content of interest. Preferably, there is a second processing step to values arranged in a second predetermined 1-dimensional arrangement.

The second processing step may follow the first processing step, thereby operating on the probability map output from the first processing step. Alternatively, the first and second processing steps may both be carried out on the same probability map, and the results combined to produce a modified probability map.

The first processing step uses only pixels and values arranged in the first arrangement or array, and the second processing step uses only pixels and values arranged in the second arrangement or array.

The first and second processing steps are repeated for pixels in a plurality of parallel 1-dimensional arrangements, to process all pixels in the image.

The first and second 1-dimensional arrangement or arrays may be considered as corresponding to first and second directions. Preferably, each 1-dimensional arrangement is a line. Preferably, the directions of the 1-dimensional lines are perpendicular, and preferably horizontal and vertical.

Preferably, the invention comprises the step of deriving the initial probability map. This can be carried out using any suitable method for the content of interest, for example, a colour- or texture-based method.

In the specification, probability values are derived for and correspond to pixels in an image. Similarly, probability values may correspond to larger regions of an image, such as a block of pixels, (possibly representing, for example, an average of probability values of pixels in the block, or a probability value of an average of pixels in the block, or similar) and the term "pixel" is to be interpreted accordingly, unless otherwise apparent from the context.

The first and/or second processing step is for determining whether or not each pixel is of the content of interest. In other words, the first and/or second processing step is intended to confirm the pixel as of the content of interest, or to eliminate the pixel as not of the content of interest. Preferably, this is achieved by modifying the corresponding pixel probability values. Preferably the probability values of at least the initial probability map are multi-valued, and preferably the probability values of at least a final or later probability map are binary.

Preferably, the first and/or second processing steps involve region or line analysis of pixels in the first and/or second 1-dimensional arrangements respectively. Preferably, the first processing step is regionally unconstrained, that is, is not based on a predetermined region (or sub-region) or pattern or group or neighbourhood of pixels. Preferably, the second processing step is regionally constrained, preferably based on a predetermined region (or sub-region) or neighbourhood of pixels, for example, in relation to a given pixel being considered. Preferably, there is a step of determining whether or not to group neighbouring pixels into a connected region of pixels having probability values indicating the same type, that is, of the content of interest or not, which may be part of the first and/or second processing step, or an additional step. The first and/or second processing steps typically involve probability values for pixels, but may also involve a consideration or analysis of pixel values in the image.

According to another aspect of the invention, it is provided to, given an image:
- identify the skin probability of pixels, e.g. based on their colour, to produce a first skin probability map,
- perform unconstrained region analysis in one direction, e.g. along horizontal lines, to produce a refined probability map,
- perform neighbourhood-based post-processing of the refined probability map in another direction, e.g. along vertical neighbourhoods, to produce the final probability map.

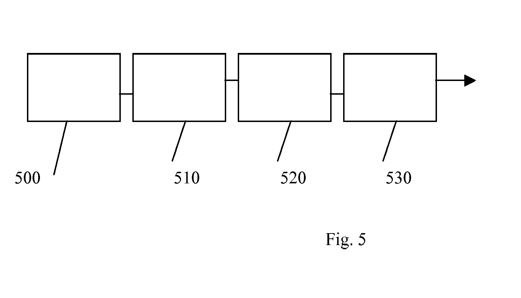

An aspect of the invention is an apparatus for executing the method of the invention. This can be in the form of an apparatus adapted to perform the method, or an apparatus comprising means for executing or adapted to execute the method of the invention, such as processing means. For example, the apparatus for detecting content in an image using a probability map comprising values reflecting a probability that pixels of an image are of said content, may comprise means for performing a first processing step to values in the probability map arranged in a first 1-dimensional arrangement, and means for performing a second processing step to values arranged in a second 1-dimensional arrangement, to produce a modified probability map. Additional means may be provided for additional steps of the method. Fig. 5 shows an apparatus according to an embodiment of the invention. The apparatus may be in the form of and comprise, for example, a first probability map processor, a second probability map processor, which carry out the first and second processing steps.

Detailed descriptions of various aspects of the invention and preferred embodiments are described below, with reference to the accompanying drawings, of which:
Fig. 1 is a block diagram of the general steps of a method according to an embodiment of the invention;
Fig. 2 is a block diagram of horizontal line processing steps in the method of Fig. 1;
Figs. 3a and 3b are block diagrams of a first option for vertical line processing steps in the method of Fig. 1;
Fig. 4a and 4b are block diagrams of a second option for vertical line processing steps in the method of Fig. 1.
Fig. 5 is a diagram of an apparatus according to an embodiment of the invention.

Given an image f(x,y), with x = 0 ... M-1and y = 0 ... N-1 the spatial co-ordinates, the method of an embodiment of the invention first calculates the skin probability of each pixel in the image, to create a skin probability map p(x,y). In other words, the image consists of a MxN array of pixels, each pixel having pixel values f(x,y), and the corresponding skin probability map is a corresponding MxN array of probability values p(x,y), where p(x,y) represents the skin probability value for the respective pixel in the array, determined according to the detection method. According to the embodiment, f(x,y) is a colour image and skin pixels are detected based on their colour. One such approach towards skin detection based on colour information is described in patent US 7,444,022 "METHOD AND APPARATUS FOR SEPARATING CONTENT TYPES IN IMAGES", incorporated herein by reference. Briefly, in US 7,444,022, skin pixels are initially identified based on a first colour-based pixel detection method, and any false detections are subsequently separated based on a second colour-based pixel separation method. The end result is a high-accuracy skin probability map p(x,y), where actual skin pixels have high values and non-skin pixels have low or zero values. However, effects such as shadows or highlights will still result in some actual skin pixels having an atypical colour for skin and, consequently, low values or zero values in the probability map. Similarly, non-skin regions will sometimes have colours which are typical of skin and, consequently, high values in the probability map. These problems typically result in false rejections and false detections, respectively, during any subsequent thresholding of p(x,y) in order to decide whether each pixel represents skin or not.

Therefore, what is needed is a technique that will preserve those skin pixels which have low or zero values in the probability map p(x,y) and eliminate those non-skin pixels which have high values in the probability map p(x,y). As seen earlier, this is typically achieved by considering the 2D neighbourhood around each pixel in the probability map p(x,y) and/or the original image f(x,y), in order to reach a more confident decision about each pixel based on the pixels around it. However, one significant problem with neighbourhood approaches is that any given neighbourhood size will provide useful measurements only for skin regions of a certain size and/or for a certain image resolution. Furthermore, the storage requirements and computational complexity for the larger neighbourhoods that are typically required for high-resolution images will be significant, making an efficient software or hardware implementation costly. In some applications, multiple neighbourhoods of different sizes may need to be considered for each image to obtain reliable results. Even more complex approaches also exist, based on full-image 2D region analysis rather than 2D neighbourhoods, and their practical implementations are even more problematic.

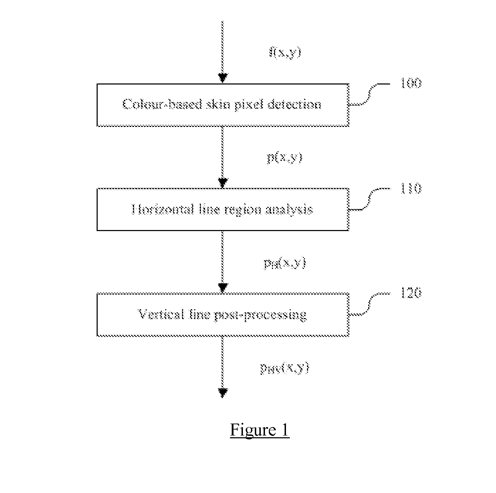

The present technique overcomes these difficulties by performing unconstrained region analysis in one direction, i.e. not based on any fixed neighbourhood, followed by post-processing in another direction. An embodiment of the invention is illustrated in Figure 1, where step 100 shows the initial colour-based skin pixel detection, step 110 shows the unconstrained region analysis in the horizontal direction, and step 120 shows the post-processing in the vertical direction. The preferred colour-based skin pixel detection method employed in step 100 is described in patent US 7,444,022 "METHOD AND APPARATUS FOR SEPARATING CONTENT TYPES IN IMAGES", incorporated herein by reference.

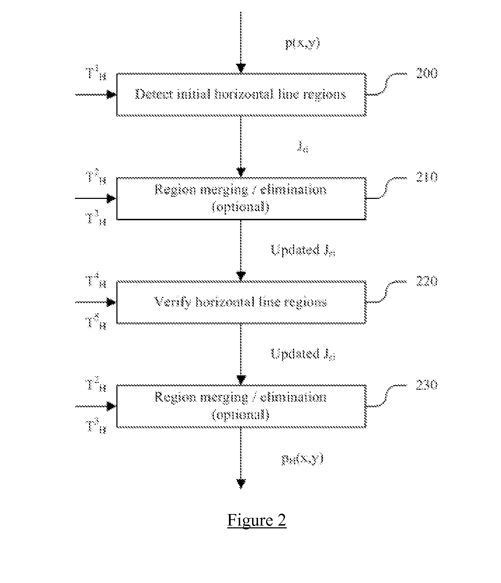

According to the embodiment, for a skin probability map p(x,y), step 110 processes each horizontal line y individually. This is illustrated in Figure 2. Let y=i be any horizontal line in p(x,y) First, we detect initial horizontal skin regions (step 200). This can be achieved by thresholding p(x,i) with a threshold T¹_{H}, i.e. if p(x,i)>=T¹_{H} then pixel (x,i) belongs to a skin region, otherwise it belongs to a non-skin region. Note that, since these are initial skin regions, T¹_{H} can take a relatively low value, lower than would normally be used to threshold the whole probability map p(x,y). This will allow skin pixels with low probability values, e.g. when shadows or highlights are present, to be included in the initial horizontal skin regions. We denote the r^{th} initial horizontal skin region of line i as Jᵣᵢ, with start and end x-coordinates jᵣₛ and jᵣₑ.

Optionally, once the initial horizontal skin regions for a line are detected, a region grouping and/or elimination step may follow (step 210). Such a step may be implemented as follows: For each non-skin/skin region, compare its size against the size of the skin/non-skin regions either side of it. If the non-skin/skin region is significantly smaller than either or both skin/non-skin regions, determined, for example, by comparing the non-skin/skin region size ratio to some threshold T²_{H}, e.g. T²_{H}=10%, then merge it with the skin/non-skin regions to form one large skin/non-skin region. In addition to, or instead of, considering the non-skin/skin region size ratio, the size of the region to be merged relative to the total number of pixels in a horizontal line may be considered and compared to some threshold T³_{H,} e.g. T³_{H}=1 %. In addition to size measurements, mean, maximum, minimum or other skin probability statistics of the non-skin and skin regions may be used in an analogous fashion to decide whether regions should be merged or not. This step essentially fills in small holes in skin regions and removes small isolated skin regions. Furthermore, if desired, the region grouping and/or elimination step may be biased towards either grouping or elimination. This results in an updated initial horizontal skin region list for each line i.

Following the detection, and optional updating, of the initial horizontal skin regions, we perform a horizontal skin region verification step (step 220). To verify a skin region Jᵣᵢ in line i, we analyse the values and/or morphology of the skin pixels with the highest probabilities in Jᵣᵢ. That is, first we detect all pixels in Jᵣᵢ for which p(x,i)>=T⁴_{H} (Jᵣₛ>=x>=jᵣₑ). Note that, since we are interested only in the most confident skin pixel detections, T⁴_{H} can take a relatively high value, higher than would normally be used to threshold the whole probability map p(x,y). In one embodiment of the invention, the entire region Jᵣᵢ is verified as a horizontal skin region if the number of pixels for which p(x,i)>=T⁴_{H} ,i.e. the high-probability pixels, is a significant fraction of the length of Jᵣᵢ, given by jᵣₑ-jᵣₛ+1, according to some threshold T⁵_{H}, e.g. T⁵_{H}=50%. In essence, an entire (longer) initial horizontal skin region is verified if a sufficient (smaller) number of its pixels have a high enough skin probability value, which is indicative of a true skin region. Optionally, other statistics of the high-probability skin pixels may be used. In an alternative embodiment of the invention, the verification of the initial horizontal skin region Jᵣᵢ is based not only on the number of high-probability skin pixels relative to the length of Jᵣᵢ, but also on the number of sub-regions within Jᵣᵢ, and/or the topology that these high-probability pixels form. For example, if the high-probability pixels within Jᵣᵢ are fragmented to a large number of sub-regions, rather than one or two long sub-regions, this may be indicative of noise rather than a coherent skin region. Yet another embodiment of the invention may employ the standard deviation of the values of the high-probability pixels within Jᵣᵢ. High-confidence skin regions are usually uniform in terms of their probability values, and a high standard deviation may be indicative of a non-skin region.

The optional region grouping and/or elimination step may also be employed at this stage instead of, or in addition to, after the detection of the initial horizontal skin regions (step 230).

The result of this horizontal line processing for each individual line in p(x,y) is a new probability map p_{H}(x,y). In a preferred embodiment of the invention, p_{H}(x,y) is a binary map, i.e. all pixels which were deemed to belong to horizontal skin region take a value of 1, and all other pixels take a value of 0. However, other variations are possible. For example, the value of pixel in p_{H}(x,y) may be determined as the mean, maximum, minimum or other function of the skin probability values p(x,y) for the horizontal region in which it belongs. For skin regions, the mean, maximum, minimum or other function may be calculated not from all the pixels in the region, but only from the high-probability pixels.

Following the calculation of the probability map p_{H}(x,y), a vertical line post-processing step is applied, to give the new probability map p_{HV}(x,y), as shown in step 120 of Figure 1. This can proceed in an analogous fashion to the horizontal lines.

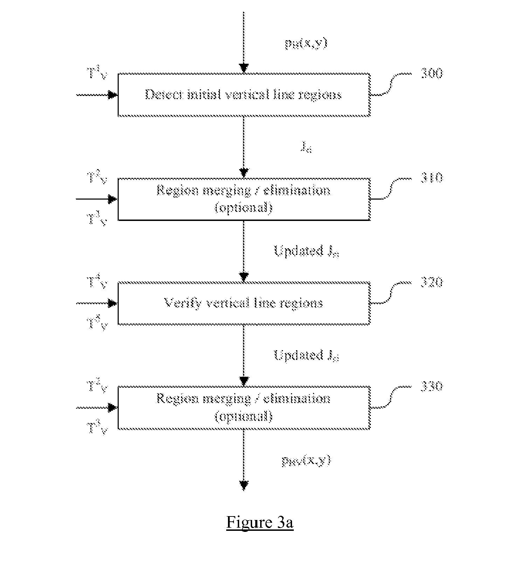

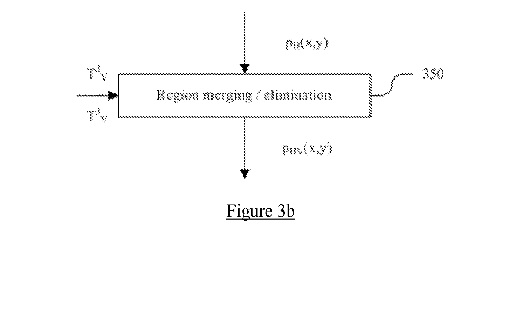

More specifically, if p_{H}(x,y) is a multi-valued probability map, then it can be processed in the same fashion as p(x,y), but looking at vertical rather than horizontal lines, as illustrated in Figure 3a. So, for a multi-valued skin probability map p_{H}(x,y), we start by processing each vertical line x individually. First, we detect initial vertical skin regions (step 300), using a threshold T¹_{V}, which may be the same as T¹_{H}. Optionally, once the initial vertical skin regions for a vertical line are detected, a region grouping and/or elimination step may follow (step 310), proceeding in the same fashion as earlier, using thresholds T²_{V} and/or T³_{V} which may be the same as T²_{H} and/or T³_{H}.Following the detection of the initial vertical skin regions, we perform a vertical skin region verification step (step 320), using thresholds T⁴_{V} and T⁵_{V}, which may be the same as T⁴_{H} and T⁵_{H}. The optional region grouping and/or elimination step may also be employed at this stage instead of, or in addition to, after the detection of the initial vertical skin regions (step 330). If on the other hand, p_{H}(x,y) is a binary probability map, then the vertical line post-processing step may take the form of just the region grouping and/or elimination step, illustrated in Figure 3b, to fill in small holes in skin regions and remove small isolated skin regions. In a preferred embodiment of the invention, p_{HV}(x,y) is a binary map, i.e. all pixels which were deemed to belong to a skin region take a value of 1, and all other pixels take a value of 0. Note that this is not restrictive, and p_{HV}(x,y) may be calculated as a multi-valued probability map, as described earlier for p_{H}(x,y).

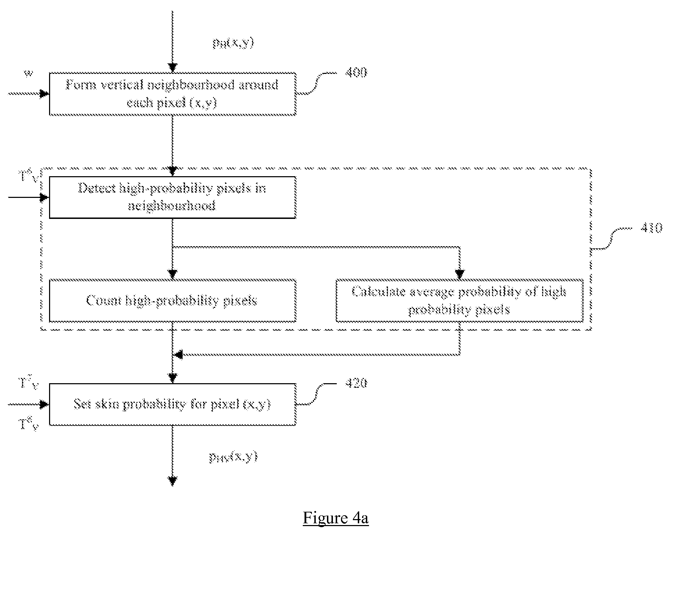

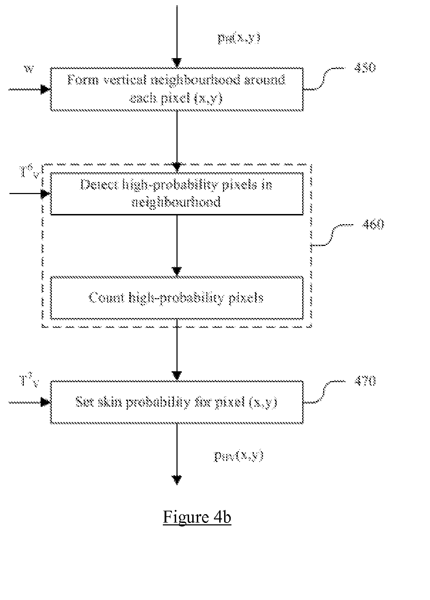

However, a simpler option is to perform the vertical line post-processing step as a small vertical neighbourhood operation, rather than as unconstrained region analysis in the vertical direction. One implementation of this is illustrated in Figure 4a. Let x=k be any vertical line in p_{H}(x,y). Then, for each pixel (k,y), we consider its neighbourhood W, comprising w neighbours above and below it (step 400). For example, for w = 2, which we found to be a reasonable value for images at various high and low image resolutions, we consider the neighbourhood p_{H}(k,y-2) to p_{H}(k,y+2). First, we detect the pixels in W for which PH(k,y)>=T⁶_{V} and we calculate their average probability (step 410). Then, if the number of those pixels is greater than a threshold T⁷_{V}, and their average skin probability is greater than a threshold T⁸_{V}, we decide that the central pixel (k,y) corresponds to skin, otherwise it does not correspond to skin. Obviously, the average skin probability is just one possible measure that can be used, and other functions of the skin probabilities may be used, such as maximum, minimum and/or standard deviation. In the case that p_{H}(x,y) is a binary probability map, we only need to count the number of pixels with non-zero probabilities in the neighbourhood, and compare that against the threshold T⁷_{V}. This is illustrated in Figure 4b. In a preferred embodiment of the invention, p_{HV}(x,y) is a binary map, i.e. all pixels which were deemed to belong to a skin region take a value of 1, and all other pixels take a value of 0. However, the method is not restricted to this case, and p_{HV}(x,y) may be calculated as a multi-valued probability map, e.g. based on some function of the skin probabilities in the neighbourhood W.

This type of neighbourhood-based vertical line post-processing is preferable to region analysis in the vertical direction because it lends itself to a simpler implementation, where it is possible to store and process as little as W lines of p_{H}(x,y) at any one time. Clearly, the processing needs to be adapted for the first and last w lines in the image, e.g. the first and last 2 lines for w = 2, since it is not possible to form complete vertical neighbourhoods. The simplest option is to carry the skin probabilities from p_{H}(x,y) to p_{HV}(x,y) for those lines. We found this type of neighbourhood-based vertical line post-processing to work well in practice, regardless of the image resolution. This is because, after the horizontal line region processing, the obtained skin regions viewed in 2D are actually very well defined, with only isolated line artefacts which can be resolved within a small vertical neighbourhood.

So far we have considered processing of horizontal and vertical lines of probability maps. In the general case, we may wish to carry out some pre-processing on the probability maps before processing, e.g. Gaussian smoothing. If that is the case then this pre-processing may be done separately along the horizontal and vertical directions. For example, one may apply a 1D pre-processing step to skin probability map p(x,y) before the horizontal line processing, e.g. 1D Gaussian smoothing, and a further (same or different) 1D pre-processing step to skin probability map p_{H}(x,y) before the vertical line processing.

Furthermore, so far we have considered region analysis in the horizontal direction, i.e. not based on any fixed neighbourhood, followed by post-processing in the vertical direction. An alternative embodiment of the invention may perform region analysis in the vertical direction, giving probability map p_{V}(x,y), followed by post-processing in the horizontal direction, giving probability map p_{VH}(x,y). Another embodiment of the invention may carry out both types of processing, giving probability maps p_{HV}(x,y) and p_{VH}(x,y), and then fuse those maps, e.g. by logical AND or OR if binary, or by averaging if multi-valued, to give a final probability map p_{F}(x,y).

Furthermore, the preferred embodiment of the invention performs processing along the horizontal and vertical directions in an image. Alternative embodiments may perform processing along different directions, e.g. horizontal and a diagonal, or one diagonal and another diagonal. This can be achieved by simply redefining the lines along which we process pixels but, once the lines are defined, their processing is the same as above. An even simpler alternative to achieve processing along any desired diagonal is to rotate the image accordingly, and process along horizontal or vertical lines in the rotated image. Clearly, other image processing operations may also be used, e.g. skewing or log-polar transform, before the processing along the different directions. In each case, the processing along lines will be the same as above - what changes is which pixels of the original image each line contains. Equivalently, alternative embodiments of the invention may directly specify processing in the original image along lines which are not straight, i.e.. curves.

The preferred embodiment of the invention addresses the problem of accurate identification of a specific content type in images, and in particular skin. Clearly, the invention is also applicable to the accurate identification of other content types characterised by a given colour or texture or other attribute which can lead to the generation of a probability map for processing according to the invention. There are numerous content types that can be characterised by image attributes, such as colour, texture etc, including, for example, grass, foliage, buildings. As mentioned above, there are various known techniques for detecting regions of specific colour or texture or other attributes, resulting in probability values for pixels, that is, probability maps. For example, as an alternative to colour-based processing, the texture strength at a pixel location may be calculated by considering a small neighbourhood, e.g. 7x7 or 9x9, of pixels centered on the pixel location of interest and calculating the intensity variance in that region. Alternatively, as in Fleck, M., Forsyth, D., Bregler, C., "Finding naked people", In Proceedings of European Conference on Computer Vision ECCV'96, vol. 2, pp. 593-602, 1996, the texture strength at any given pixel location may be calculated as the difference between the original intensity image and its filtered version using a median filter. In either case, pixels corresponding to different content types may be characterised by a different texture strength, just like pixels corresponding to different content types may be characterised by a different colour, and can both lead to the generation of a probability map for processing according to the invention.

Fig. 5 shows an apparatus according to an embodiment of the invention. The apparatus includes an image source 500, which outputs an image in the form of signals, to a probability map generator 510, which generates a first probability map p(x,y), as described above. The image source may be, for example, storage means storing images, including DVDs or similar, or a source such as a camera or scanner, or source of other image signals, such as television. The first probability map is output to a first probability map processor 520, which carries out the horizontal line processing, as described above, to produce a second probability map p_{H}(x,y). The second probability map is output to a second probability map processor 530, which carries out the vertical line processing, as described above, to produce a third probability map p_{HV}(x,y). The third probability map is output from the second probability map processor, for further handling, for example, further processing in another processor, or storage in a storage device or storage means.

An apparatus according to an embodiment of the invention can be implemented in other ways, for example, in the form of a suitably-programmed computer system. Components of the system as described may be provided in software or hardware form, for example using a dedicated chip.

## Claims

**1.** A method of detecting content in an image using a probability map comprising values reflecting a probability that pixels of an image are of said content, by processing signals corresponding to the probability map, the method comprising performing a first processing step to values in the probability map arranged in a first 1-dimensional arrangement, and performing a second processing step to values arranged in a second 1-dimensional arrangement, to produce a modified probability map.

**2.** The method of claim 1 wherein the first and/or second processing step comprises a first stage of identifying likely pixels of the content and a second stage of verification of pixels as said content.

**3.** The method of claim 1 or claim 2 wherein the first processing step comprises analysing in combination a plurality of the values in the first arrangement and the second processing step comprises analysing in combination a plurality of the values in the second arrangement.

**3.** The method of claim 1 or claim 2 wherein the first and second processing steps are different.

**4.** The method of any preceding claim wherein the second processing step follows the first processing step.

**5.** The method of any preceding claim wherein the second processing step comprises constrained region analysis of probability values for pixels in the second arrangement.

**6.** The method of claim 5 comprising analysing probability values for a neighbourhood of pixels.

**7.** The method of claim 6 comprising, for a given pixel, analysing a predetermined number of neighbouring pixels to determine probability value of the given pixel.

**8.** The method of claim 7 wherein 4 neighbouring pixels are analysed.

**9.** The method of any preceding claim wherein the first processing step comprises unconstrained region analysis of probability values for pixels in the first arrangement.

**10.** The method of any preceding claim further comprising a step of grouping neighbouring pixels into connected regions having a probability indicating said content or into regions having a probability indicating not said content, in said first arrangement and/or said second arrangement.

**11.** The method of any preceding claim wherein at least one 1-dimensional arrangement is a line.

**12.** The method of claim 11 wherein the first and second 1-dimensional arrangements are perpendicular lines, preferably horizontal and vertical.

**13.** The method of any preceding claim wherein said content is skin.

**14.** Apparatus comprising means for executing the method of any preceding claim.

**15.** Computer-readable storage means comprising computer-executable process steps for executing the method of any preceding claim.
